# EUROPEAN PATENT APPLICATION

(11) **EP 1 065 404 A2**
(43) Date of publication of application: **03.01.2001**
(21) Application number: 00113860.1
(22) Date of filing: 30.06.2000
(51) Int. Cl.: F16F 9/53

(54) **Method of active control of vibrations by means of electrorheologic material and damping device that carries out this method**

(30) Priority: 30.06.1999 IT PI990040
(71) Applicant: C.N.R. Consiglio Nazionale delle Richerche, 00185 Roma (IT)
(72) Inventor: Brocato, Maurizio, 95030 Trappeto di S. Giovanni la Punta (IT)
(74) Representative: Celestino, Marco

(57) **Abstract**

A damping method and device for active control of vibrations (Φ) that occur in a known direction between a first (1) and a second (2) body. The damping device has of a mechanical part, an electrical part (30) and a control unit (40). The mechanical part has two stiff bodies integral to plates (1) and (2), linked to one another so that only relative translations are allowed along a predetermined axis according to a direction (Φ) measured by a sensor of movement (32). The translations (Φ) produce a force of reaction owing to deformation of an electro-rheological fluid (ER) and to that of an auxiliary passive system. The electrical part provides turning on or off an electrical field that crosses the fluid (ER) arranged between the two bodies (1 and 2). It consists in a switch (30) for high voltage and quick response of commutation and in an interface (31) between the switch (30) and the digital control signal coming by a computer (40) that operates the off/on of the switch 30 according to the level and rate of momentary deformation given to the ER in order to control the mechanical stiffness. In condition of small oscillations (Φ) the fluid (ER) arranged between the plates (1) and (2) has a resilient linear response. In substance, it is an 〈〈electro-elastic〉〉 system with electrically controllable stiffness.

## Description

### Field of the invention

The present invention relates to a method of active control, by means of electro-rheological material, of the resistance to the relative movement between two elements of a mechanical system, which can be mounted for active vibration damping, for absorption of energy caused by shocks, for insulation from vibrations and shocks, etc.

The invention relates furthermore to a damping device that carries out this method.

### Description of the prior art

It is well known the use of electro-rheological material, hereinafter indicated as ER, as actuators in active control systems.

ER are material, in particular colloidal dispersions, which in the absence of electrical field behave substantially like a liquid. On the contrary, when immersed in an enough intense electrical field, they are subject to a reversible change of their physical structure with a following change of the mechanical properties. This properties can be exemplified with the model of fluid of Bingham: in response to tangential stress provided below a certain threshold the material behaves as an elastic solid, whereas in response to tangential stress provided beyond this threshold it behaves as a viscous fluid.

Recent studies on the use of ER fluids (or MR magneto-rheological) as actuators in damping systems or in case of insulation from vibrations, and in particular in shock absorbing devices, are mainly referred to the operation of the fluids in viscous condition. See for example WO98/49460.

In such cases a damper reacts with forces, in first approximation, proportional to the deflection speed; this proportion, i.e. the viscosity, is responsive to the applied voltage. The damping capacity of the system, due to the viscosity of the fluid, is maximum when maximum voltage is applied. In some cases it is useful to control this voltage for modulating the damping capacity.

Alternatively, control systems with ER valves have been studied. These valves are based on the transition to a momentary and reversible solidification that occurs when an electrical field is applied to the material, which otherwise is liquid.

In shock absorbers that use this method a CPU controls the transition fluid/solid, and the damping of the oscillations is obtained adjusting the flow in an hydraulic circuit by means of these valves. See for example EP 0315416 and the above cited WO 98/22727.

### Summary of the invention

It is an object of the present invention to provide a method for active control of the vibrations that exploits the characteristics of the electro-rheological fluids(ER) only in their solid phase i.e. with the elastic response.

It is a particular object of the invention to provide a method suitable for the control of small axial or torque oscillations for damping or insulating them by means of an electro-elastic system.

It is another particular object of the invention to provide a method for insulating or damping small oscillations transmitting at every instant forces proportional to movements, except from a finite number of isolated instants.

The above described objects are achieved in particular by the method of active damping vibration that is generated in the relative movement of translation or rotation, along a known direction or known axis, between a first and a second body, whose characteristic is that it comprises the steps of:
- arranging at least a first surface integral to the first body and at least a second surface integral to the second body so that such surfaces are reciprocally facing each other, are parallel along said known direction and are equidistant;
- arranging an electro-rheological fluid between the surfaces;
- arranging between the two bodies a resilient loaded auxiliary element;
- continuously measuring the relative movement between the two bodies, as well as for sampling and controlling the measured signal in response to time;
- application of a voltage between the first and second surface, whereby an electrical field can be applied through said fluid is created,
- removal of said voltage between said surfaces after a predetermined delay, so that said fluid is not any more crossed by the electrical field;
- repeating the step of application and removal of the voltage between said surfaces according to the information obtained by said measure of movement and according to a predetermined synthesis function responsive to time and to movement.

To obtain the damping of a free oscillation relative movement between the two bodies, said synthesis function has an algorithm providing that:
- the fluid is crossed by an electrical field of maximum intensity, i.e the surfaces are at maximum voltage, when the resilience owing to deformation of the electro-rheological fluid rises with time, i.e. when the absolute value of the relative movement rises;
- the fluid is not crossed by the electrical field, i.e the surfaces are equipotential, when said resilience decreases, i.e the absolute value of the relative movement decreases.

For damping forced oscillations of a relative movement between the two bodies the synthesis function is based on a similar algorithm wherein the total potential mechanical energy of the system, i.e that of the fluid above cited and that of the loads, is considered.

These synthesis function provides that in most favourable conditions the voltage between said surfaces is kept fixed, alternatively at its maximum value or at zero, preferably in every cycle of oscillation of the motion.

According to a preferred aspect of the invention:
- the passage from voltage zero to maximum occurs two times in a cycle, and this must be done when the resilience of the fluid is at zero,
- the inverse passage occurs also two times in a cycle, when the relative speed between the two elements is at zero, i.e said resilience is at maximum.

In total, for every cycle of oscillation the most favourable number of variations of the electrical field is four, two times from zero to maximum and two times from maximum to zero, alternated.

For oscillations whose frequency does not allow this most favourable operation, a similar control strategy can be applied keeping the voltage fixed between the surfaces even for a time longer than a fourth of cycle of oscillation. However, it is necessary that the variations of intensity of the electrical field, from maximum to zero and from zero to maximum, are provided in similar dynamic conditions, i.e. in the steps wherein is at zero respectively the relative speed and the resilience.

The method is based, therefore, on the possibility of changing the mechanical properties of an ER material through electrical fields: in condition of small perturbations this material behaves as a solid with a module of elasticity responsive to the density of the electrical field. The whole of the two facing surfaces capable of relative motion and of the ER material located therebetween works electrically as an electrical condenser. When the ER material is subject to voltage it deflects, in order to remain in the elastic phase, the work done by the external forces is stored as an increment of energy of the electrical field. This transfer of energy, from mechanical ad electric, is in first approximation reversible, whereby the ER behaves as a resilient solid if the voltage applied is kept fixed. If instead the ER is electrically discharged after that the mechanical energy has been transformed into energy of the electrical field, said energy is transferred to another part of the circuit and transformed, for example for Joule effect on a suitable resistance. This mechanism allows to the system of transforming mechanical energy into electrical energy i.e into heat, working then as an damper.

According to another aspect of the invention, a damping device for active control of vibrations that are generated in a known direction between a first and a second body, has the characteristic that it comprises:
- at least a first surface integral to the first body and at least a second surface integral to the second body, said surfaces being reciprocally facing each other, parallel along said known direction and equidistant;
- means for containing an electro-rheological fluid arranged in the space between the two surfaces;
- means for continuously measuring the relative movement between the two bodies, as well as for sampling and controlling the signal resulting therefrom;
- means for processing said signal as computed, wherein an algorithm of active control resides;
- means for supplying voltage between the surfaces, comprising a circuit that connects them, whereby an electrical field can be applied through the fluid that changes its mechanical characteristics;
- means for starting or stopping said feeding and, at the same time, turning off or on said circuit through a dissipative electrical load, operating on the basis of signals coming from said means for means for continuously measuring the relative movement.

The means for processing said signal comprise preferably software means that operate according to a control algorithm as above described, i.e., in the best way, operating the means for starting or stopping the electrical supply four times in every cycle of oscillation, whereby the ER fluid is under voltage when the resilience of the system is increasing, and is at voltage zero in the contrary.

A less favourable way, but is in any case suitable for the object, if two opposite phases (starting or stopping of the feeding electric) occur after an odd number of fourths of cycle.

The reciprocally facing surfaces can be cylindrical e or plane for a motion of relative translation, whereas for motion of relative rotation the surfaces are cylindrical with circular concentric cross section, with the generatrix lines parallel to the axis of relative rotation.

For increasing the resilient reaction of the damping device the reciprocally facing surfaces can have their area increased and can be in a multiple number.

### Brief description of the drawings

Further characteristics and advantages of the method for active damping and of the damping device according to the present invention will be made clearer with the following description of an embodiment thereof, exemplifying but not limitative, with reference to attached drawings wherein:
- figure 1 shows a diagrammatical view of the operation of the method according to the invention;
- figure 2 shows a damping diagram obtained according to the invention;
- figure 3 shows a sectional longitudinal view of a damping device that uses the principles according to the invention;
- figure 4 shows a cross sectional view according to arrows IV-IV of the damping device of figure 3;
- figure 5 shows a cross sectional view according to arrows V-V of the damping device of figure 3;
- figure 6 shows an electrical diagram of the electronic control means associated to the damping device of figure 3.

### Description of a preferred embodiment

An apparatus that carries out the method according to the invention comprises a mechanical part, an electrical part and of a processing system.

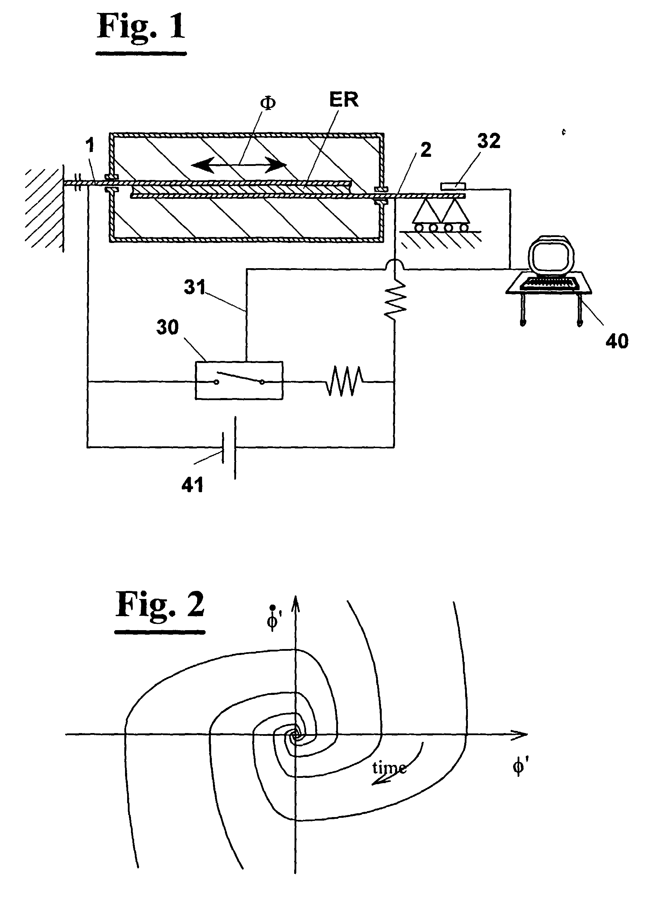

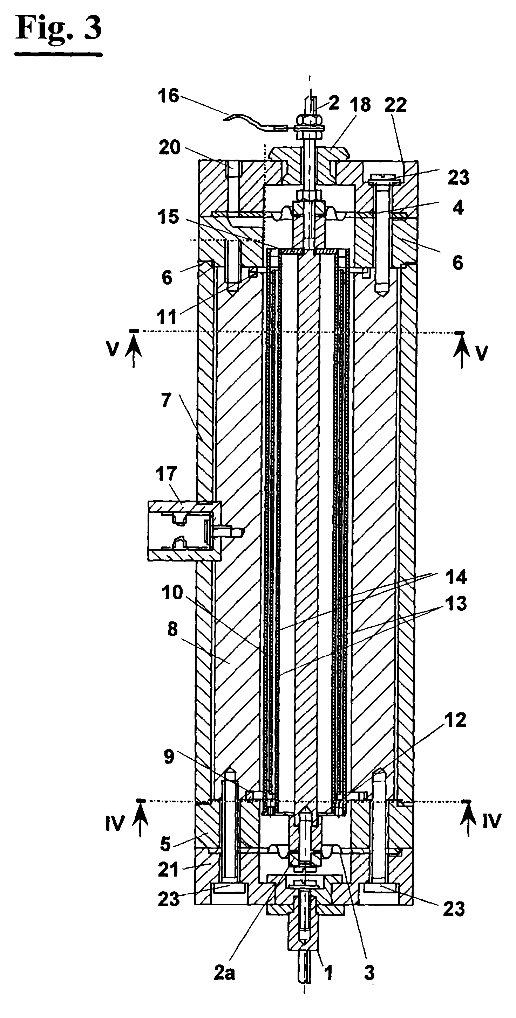

With reference to figure 1, the mechanical part has two stiff bodies integral to plates 1 and 2, linked to one another so that only relative translations on an axis predetermined according to a direction Φ measured by a sensor of movement 32. These translations Φ produce a force of reaction owing to deformation of an electro-rheological ER fluid and of an auxiliary passive system, described in the embodiment of figure 3.

The electrical part allows of turning on or off an electrical field that crosses the ER fluid arranged between the two bodies 1 and 2. It consists in a switch 30 suitable for high voltage and quick response of commutation and by an interface 31 arranged between the digital control signal and the switch 30.

A CPU residing in a PC 40 acts on the electrical interface 31, turning off or on switch 30 according to the level and rate of momentary deformation given to the ER in order to control the mechanical stiffness.

In condition of small oscillations Φ, the ER fluid arranged between the plates 1 and 2 has a resilient linear response. In substance, it is a 〈〈electro-elastic〉〉 system with the electrically controllable stiffness.

Turning on and off the electrical field four times for every oscillation a response is obtained as that described in figure 2: in the movement-speed diagram the trajectories are traced suitable for reducing the amplitude of the vibrations in the quickest time, even if within a resilient response except from a finite set of instants. The system provides thus maximum stiffness in the first or third quadrant, minimum (in any case not zero) in the second or fourth quadrant; Therefore the electrical field that crosses the ER must be zero in the second and fourth quadrant, maximum in the first and third quadrant. The algorithm is "robust" if the change of intensity of the field occurs with delay with respect to the moment when the trajectory crosses the axes of the movement-speed diagram.

The practical applications of the invention are subject to the following conditions:
- only small deformation of the ER material,
- high response Off/On of the electrical circuit,
- operation with DC at high voltage and high frequency relatively to the speed of interruption at high voltage,
- implementation of an appropriate mathematical algorithm of control, for example of the type Bang/Bang as that described herein.

The limit to small oscillations is due to both the type of electro-rheological fluid used, for example colloidal dispersions, and to the geometry of the damper.

According to an embodiment with preferred geometry, with reference to figures 3, 4 and 5, a damping device is provided of the oscillations between two bodies 1 and 2, with a translational degree of freedom along the common axis, advantageously indicated as fixed body and mobile body . Fixed body 1 has axis physically defined by a rod linked to the centre of a cover 21. On the latter, in a suitable seat, a printed flexible membrane 3 is arranged, then blocked by insulating body 5. At the centre of membrane 3 is linked, in a socket, an end 2a of the axis of movable body 2, physically defined by a second metal rod.

On body 5 a tube 8 rests fastened to cover 21 by means of screws of insulating material 23. By means of an appropriate support ring 9 to tube 8 a tube concentric 10 is connected electrically and suspended mechanically, ring 9 crosses, without touching it and at an appropriate distance, a tube 13 of movable body 2. The ensemble of tube 8, support ring 9 and concentric tube 10 is made of conductive material and has the function electrical of anode.

In a symmetric way with respect to the centre of the damper, a second support ring 11 links tube 8 and concentric tube 10 and a second insulating body 6 rests on the Other base of the tube 8. On insulating body 6 rests a second printed flexible membrane 4 rests, crossed by the axis of the body 2, which is integral to it By means of nuts and locked by a second a second cover 22, which is linked, like cover 21, to tube 8 by insulating screws 23. The junctions between tube 8, body 5 and insulating body 6, between body 5 and cover 21 and between insulating body 6 and second cover 22 assure a tight seal. The centre of cover 22 is crossed by axis 2 in order not to prevent it from translating. A rubber seal 18 limits the amplitude to avoid permanent deformations of membranes 3 and 4.

On rod 2 are keyed the elements of the mobile body. In the same sorting order of the above description fixed body 1 comprises: a fixed centring body 12, a couple of concentric tubes 13 and 14 and a second centring body 15, symmetric with respect to the previous. The whole part is the cathode, whose contact 16 is located on axis 2. A minimum distance depending on the voltage prevents from the formation of electric arcs between tube 10 and supports 12 and 15.

Finally, a insulating liner 7, crossed by the anode electrical contact 17, covers tube 8; connection mouths 20, necessary for emptying and the filling of the sealed chamber arranged between the two bodies, are located on insulating bodies 5 and 6.

Membranes 3 and 4 have to sale and centre axis 2 with respect to axis 1 are spring loaded; the latter effect can be adjusted in a preferred way for in case the membrane with other ones more or less flexible.

The ER fluid contained between the concentric tubes 8, 13, 10 and 14 is subject to an electrical field proportional to the voltage applied to electrodes 8,10 and 13,14 and to a small mechanical deformation proportional to their relative movement. For the presence of the spring loaded membrane 3 and 4, in response to small relative translations between fixed body and movable body two opposite forces are obtained, oriented along axis 1-2 and proportional to said translation. By applying an enough high voltage, for ER effect and for adhesion of the fluid to the walls, the mechanical stiffness at the start of such reactions increases.

With respect to a easy geometry like the theoretical one of figure 1, the geometry of figures 3, 4 and 5 exploits the cylindrical symmetry and the many cylindrical gap formed by concentric tubes 8, 13, 10, 14, thus increasing remarkably the range of resilient reaction of the damper. For further increasing the surface that faces, for unit of length, the axis of the damper, the electrode may have a shape different and more complex from that shown.

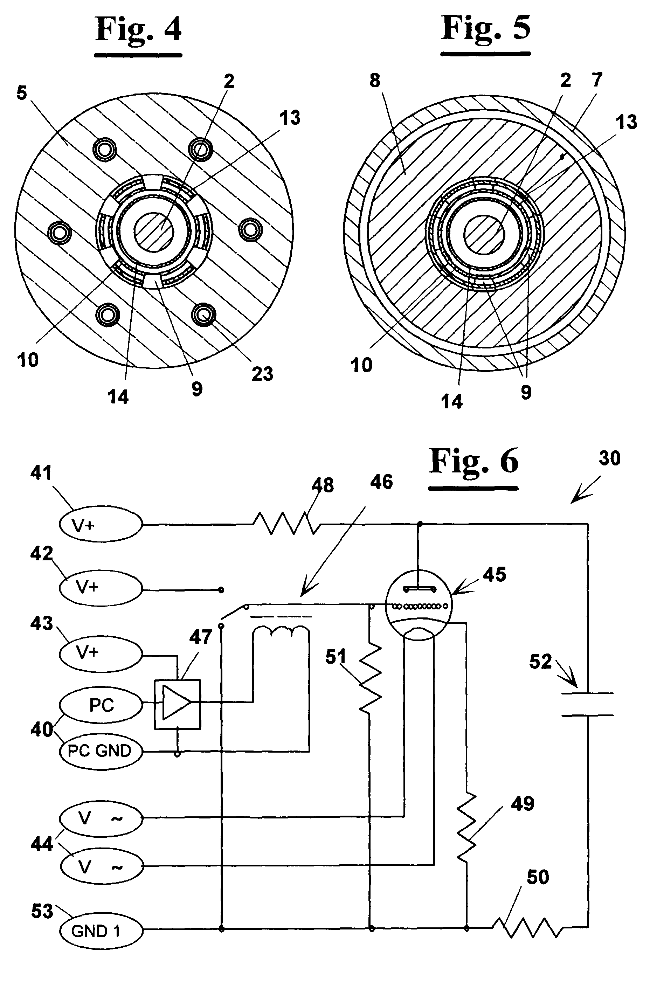

With reference to figure 6, the electrical system necessary for operating the invention comprises the following parts: a high voltage supplier 41; a low voltage supplier with three output terminals, among which two, 42 and 43, are linked to a triode 45 and one, 44, is linked to a relay 46 by means of a buffer 47.

HV supplier 41 is connected to two parallel sides: one is made of the electrodes of the fixed and movable body of the mechanical system 52, that is defined as a capacitive load, and the other by a damping switch device. The latter has a triode 45 whose grid voltage is controlled by relay 46 triggered through an adapter buffer 47 linked to the output of the computer 40.

When the triode is in interdiction, the HV generator loads electrical condenser 52. At the saturation the positive pole of the generator and that of the electrical condenser are both linked to ground 53, thus discharging the latter, whereas the former works on a predetermined resistive load 48.

Finally resistances 49 and 50 allow the measure of the current in the two phases of charging and discharging the electrical condenser 12 and have the function of sensing the relative movements of the electrodes of the condenser.

The processing system comprises: a movement sensor with a relative electric supply; a front-end system for a feed-back of the output signal of this sensor; a computer having a data acquisition board (AD conversion); a digital output system.

The computer computes the signal of the sensor in order to determine speed and movement of the mechanical movable axis and, according to a implemented control algorithm, it follows the turning off and on steps of the electrical switch through the digital output signal.

Instead of the sensor of movement, the signal taken at the ends of resistances 49 and 50 of figure 4 can be analysed. A sensor may be connected in series through fixed body 1 to the object thus measuring the force actually transmitted through the system.

The control algorithm that better allows the damping of free oscillations or the reduction of resonance in case of forced oscillations is that shown in figure 2, obtained with triode 45 of figure 6 that is in interdiction when the speed of the movement is positive, or close din the other cases. Other algorithms can be programmed according to the needs.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Method of active control of vibrations that are generated in the relative movement of translation or rotation, along a known direction or known axis, between a first and a second body, **characterised in that** it comprises the steps of:
- arranging at least a first surface integral to said first body and at least a second surface integral to said second body so that such surfaces are reciprocally facing each other, are parallel along said known direction and are equidistant;
- arranging between said surfaces an electro-rheological fluid;
- arranging between said two bodies a spring loaded auxiliary element;
- continuously measuring the relative movement between said two bodies, as well as sampling and controlling the measured signal in response to time;
- application of a voltage between said first and second surface, whereby an electrical field through said fluid is created,
- removal of said voltage between said surfaces after a predetermined time, so that said fluid is not any more crossed by electrical field;
- repeating the step of application and removal of the voltage between said surfaces according to the information obtained by said signal and according to a predetermined synthesis function responsive to time and to movement.

2. Method of active control of vibrations according to claim 1, wherein, for damping a relative movement of free oscillation between the two bodies, said synthesis function has an algorithm providing that:
- the fluid is crossed by an electrical field of maximum intensity, i.e the surfaces are at maximum voltage, when the resilience owing to deformation of the electro-rheological fluid rises with time, i.e when the absolute value of the relative movement rises;
- the fluid is not crossed by an electrical field, i.e the surfaces are equipotential, when said resilience decreases, i.e the absolute value of the relative movement decreases.

3. Method of active control of vibrations according to claim 2, wherein for damping forced oscillations of a relative movement between the two bodies said potential energy comprises the total mechanical potential energy, i.e. the elastic energy of the ER fluid and the elastic energy of the loads.

4. Method of active control of vibrations according to claims 2 or 3, wherein said synthesis function provides that the voltage between said surfaces is kept fixed, alternatively at its maximum value or at zero, preferably in every cycle of oscillation of the relative movement between said two bodies.

5. Method of active control of vibrations according to the previous claims, wherein
- the passage from voltage zero to maximum occurs two times in a cycle, at the same time as the steps of increasing of the resilience of said ER fluid,
- the inversion from maximum voltage to zero occurs also two times in a cycle, at the same time as the steps of decreasing the resilience of said ER fluid, whereby, in total, for every cycle of oscillation of the relative movement between said two bodies, the most favourable number of variations of the electrical field is four, two times from zero to maximum and two times from maximum to zero, alternated.

6. Method of active control of vibrations according to claims from 1 to 4, wherein said variation of voltage between said surfaces, from maximum to zero and from zero to maximum, is provided when the relative speed and the resilience of movement between said two bodies respectively are zeroed.

7. Damping device for active control of vibrations that are generated in a known direction between a first and a second body, **characterised in that** it comprises:
- at least a first surface integral to said first body and at least a second surface integral to said second body, said surfaces being reciprocally facing each other, parallel along said known direction and equidistant;
- means for containing an electro-rheological fluid arranged in the space between said surfaces;
- means for continuously measuring the relative movement between said two bodies, as well as for sampling and controlling the signal resulting therefrom;
- means for processing said signal as it is computed, wherein an algorithm of active control resides;
- means for supplying voltage between said surfaces, comprising a circuit that connects them, whereby an electrical field can be applied through said ER fluid that changes its mechanical characteristics;
- means for starting or stopping said supply and, at the same time, for turning off or on said circuit through a dissipative electrical load, operating on the basis of signals coming from said means for continuously measuring the relative movement.

8. Damping device for active control of vibrations according to claim 7, wherein said means for processing said signal comprise software means that operate according to said algorithm of control, the latter, operating said means for starting or stopping said electrical supply four times in every cycle of oscillation, whereby said ER fluid is crossed by electrical field when the resilience of said two bodies is increasing, and is at voltage zero in the contrary.

9. Damping device for active control of vibrations according to claims 7 or 8, wherein said at least a first surface integral to the first body and said at least a second surface integral to the second body are equidistant, cylindrical and with generatrix lines parallel along the direction of oscillation.

10. Damping device for active control of vibrations according to claims 7 or 8, wherein a first plurality of surfaces integral to the first body and a second plurality of surfaces integral to the second body are provided, said surfaces being equidistant, cylindrical and with generatrix lines parallel along said direction of oscillation.
